# EUROPEAN PATENT SPECIFICATION

(11) **EP 1 344 408 B1**
(45) Date of publication and mention of the grant of the patent: **09.04.2008**
(21) Application number: 00991225.4
(22) Date of filing: 18.12.2000
(51) Int. Cl.: H04Q 3/00

(54) **TELECOMMUNICATION SYSTEM AND METHOD FOR TRANSFERRING INFORMATION BETWEEN AN INTELLIGENT NETWORK CONTROL UNIT AND A TERMINAL**
TELEKOMMUNIKATIONSSYSTEM UND VERFAHREN ZUR INFORMATIONSÜBERTRAGUNG ZWISCHEN EINER STEUEREINHEIT EINES INTELLIGENTEN NETZWERKS UND EINEM ENDGERÄT
SYSTEME DE TELECOMMUNICATION ET PROCEDE DE TRANSFERT D'INFORMATION ENTRE UNE UNITE DE COMMANDE DE RESEAU INTELLIGENT ET UN TERMINAL

(43) Date of publication of application: 17.09.2003
(73) Proprietor: TELEFONAKTIEBOLAGET LM ERICSSON (publ), 164 83 Stockholm (SE)
(72) Inventor: NOLDUS, Rogier, August, NL-5045 ML Tilburg (NL); DE ROOIJ, Frans, NL-5045 BC Tilburg (NL); DE JONG, Sjoerd, NL-5614 GC Eindhoven (NL); GUNCOR, Ahmet, NL-3194 TC Hoogvliet (NL)
(74) Representative: Tonscheidt, Andreas
(86) International application number: PCT/EP2000/012992
(87) International publication number: WO 2002/051167

(56) References cited:
- WO-A-00/10352
- US-A- 5 752 188

## Description

This invention relates to a telecommunication system for transferring telephone calls and/or data between a first terminal and at least one second terminal, comprising: a telecommunication network for the transfer of the telephone calls and/or the data; an Intelligent Network (IN) control unit, coupled to the telecommunication network for providing Intelligent Network services in the telecommunication network; and a message server unit, coupled to the telecommunication network for receiving a first message from one of the terminals and for sending a second message to at least one of the terminals. The invention further relates to a method for transferring information in such telecommunication system, from the IN control unit to at least one of the terminals and vice versa, and the invention relates to the use of the first and the second message in such telecommunication system.

Telecommunication systems for making telephone calls, and transferring data, comprising a telecommunication network such as a Public Switched Telecommunications Network (PSTN) or a Public Land Mobile Network (PLMN), are often equipped with Intelligent Network (IN) services. These IN services enhance the functionality of the telecommunication system and allow for personalised services offered by or via the telecommunication system. IN services have been described in detail in the ITU-TS Recommendation Q.1200. These services comprise for example short number services allowing the user to contact a personal voice mail box using a short, generic number, personal number services, where a number is coupled to a person instead of to a telephone extension. Also IN services comprise pre-paid services, toll free calling services, credit-card services and Virtual Private Network (VPN) services, allowing groups of users, such as employees of a company to make use of a public telecommunication system while obtaining a functionality comparable to a private telecommunication network such as a Private Branch exchange (PBX).

To be able to execute these and other IN functions, an IN control unit, such as a Service Control Point (SCP) is provided in the telecommunication system. The IN control unit controls the IN functions: e.g. it re-routes telephone calls, it interprets short numbers, it can trace the position of a mobile user, it can enable, block or interrupt telephone calls and can keep record on call-credit information in the case of a pre-paid user. As the IN service is a personalised service, the required actions that have to be performed by the IN control unit differ from user to user. Therefore the IN control unit comprises user specific data for every user that has access to IN functions. These data can comprise a user profile defining which IN services have been activated for the user as well as user specific parameters for these IN services. Also the data can comprise other user specific data, such as the location of the mobile terminal of the user. Besides the user specific data, the IN control unit also holds an amount of generic, i.e. non user specific data such as information about the call charges per time unit.

To be able to make optimum use of the capabilities of IN services, it is required that the user of these services has access to the generic and user specific data as outlined above. Also other persons may find a need to have access to these data, such as a facility manager of a company, who wants to monitor the employees making use of the IN services, or a parent, who wants to be able to supervise the telephone extensions of his/her children.

A problem is that it is difficult to transfer data between the IN control unit and a user. It is for example difficult to transfer generic and user specific data, which is related to IN functions, such as call-charges and call-credits of pre-paid terminals, from the IN control unit to a terminal. Also, the user or an other authorised person cannot have easy access to the generic data and to the user specific data related to the respective IN functions as well as does not have the capability to easily send data to the IN control unit, for example to change a profile. This means that it is difficult for a user to get information such as about which services are currently active and that it is difficult for a user to change his or her profile. Also for other persons, as for example facility managers having an authorisation to do so, it is difficult to obtain or change such data.

A known solution, at least for an aspect of this problem is to transform the data from the IN control unit into voice by a text to speech conversion unit which is located in a Mobile Switching Center (MSC). Once converted to speech, a speech signal is transmitted from the MSC to the terminal of the user. In this way the user is able to listen to the data requested. A disadvantage is that text to speech conversion is a one-way connection: To enable the user to not only receive information but also to transmit information, additional solutions are required. An other disadvantage is that this solution requires the full bandwidth of a voice signal, which forms an additional load on the system. Still an other disadvantage is that it is regarded as a quite user-unfriendly, sometimes even irritating solution, because getting the required information can be time consuming for the user and because the user might have difficulties to obtain an overview in the case of a large amount of data. Also a disadvantage of this solution is that users roaming from other countries or non-native users might not be able to understand the specific language, requiring language selection options, which further complicates the solution.

Another known solution for the above mentioned problem is to send unstructured supplementary service data (USSD) from a mobile station to the SCP and vice-versa. A disadvantage is that it is not a very user friendly solution, because the instructions a user sends to the SCP generally consist of numeric codes, which the user has to remember or lookup in a list, or which codes must have been preprogrammed in the mobile station. An other disadvantage is that this solution only functions when the mobile station is switched on: in the case a mobile station has been switched off and the IN control unit tries to transmit data to this user, no connection to the mobile station can be made and the SCP has to accept a failure or has to retry to transmit the data.

An object of the invention is to remove or at least reduce the drawbacks of the prior art. Another object of the invention is to simplify the use of IN services. Also an object of the invention is to make the transfer of data between the IN control unit and a user simple and user friendly. A further object of the invention is to allow for easy transfer of information from the IN control unit to a terminal. Also an object is to give users or other authorised persons easy access to the generic and user related data in the IN control unit and the ability to easily change their profiles. Another object of the invention is to open-up opportunities for providing new intelligent services that can be created because of making the data and profiles accessible.

To achieve the above and other goals the telecommunication system according to the invention is characterised in that the IN control unit is adapted to send the first message to the message server unit and/or to receive the second message from the message server unit, wherein the IN control unit is advantageously adapted to define a contents of the first message and/or interpret a contents of the second message for taking a specific action. An advantage is that this creates a possibility for easy and user friendly communication from the IN control unit via the message server unit to at least one of the terminals and/or from one of the terminals via the message server unit to the IN control unit. Another advantage is that the communication uses an existing type of messages, which is known and familiar to the user. Also an advantage is that, apart from the adaptations in the IN control unit and the message server, no substantial modifications are required for the rest of the telecommunication system. A further advantage is that it is relatively easy to develop as well as relatively easy to standardise, because an existing type of messaging is used. Still a further advantage is that most existing terminals are prepared to use the new functionality that can be offered, because a substantial amount of existing terminals already have the messaging functionality implemented. Still a further advantage is that message server units have been implemented in a large amount of communication network technologies, making the invention widely usable. The message can be sent to a single terminal or to a group of terminals, the latter may be useful for VPN services.

As such, involvement of the intelligent network control unit in the sending and receiving of messages is known from WO 98/28920, where a service control point (SCP), which performs IN functions in a mobile telecommunications network, is involved in the handling of Short Messages (SM). However, the SCP is only involved in the routing of the SM's, and is not able to generate or interpret these messages. Furthermore, the SCP and the Short Message Service Center (SMSC) are not directly coupled.

Advantageously the IN control unit is adapted to be coupled to the message server unit, enabling the IN control unit to send the first message and/or receive the second message to and/or from the message server unit, where advantageously the IN control unit is coupled to the message server unit via an interface. Because the IN control unit is adapted to be coupled to the message server unit, additional traffic generated by the messages sent between the IN control unit and the message server unit generates no supplementary load on the regular interfaces between the IN control unit and the telecommunication network and the messages can be lead via an additional interface, such as a digital wired connection. Advantageously the IN control unit is coupled to the message server unit via an interface, a protocol for communication via the interface comprising Simple Mail Transfer Protocol (SMTP) or Short Message Peer to Peer (SMPP) Protocol running on top of Transmission Control Protocol / Internet Protocol (TCP/IP). By using these standardised protocols, the interchangeability between equipment from various manufacturers of components for such telecommunication systems is facilitated, which is especially advantageous for an operator or owner of a telecommunication system or telecommunication network.

The telecommunication network can comprise a mobile telecommunication network, such as a GSM network where the IN control unit can comprise a Service Control Point (SCP). The GSM network can, for example, be expanded with advanced data communication technology such as Wireless Access Protocol (WAP) and General Packet Radio Service (GPRS).

Also, the telecommunication network can comprise a Wideband Code Division Multiple Access (W-CDMA) network, in which case the IN control unit can comprise a Service Capability Server (SCS). The SCS is connected to at least one Application Server (AS), which assists the SCS by performing specific tasks. Each AS is connected to the SCS via a respective interface. The respective interface to the at least one AS can comply to the Parlay Application Programming Interface (API) standard. Also the respective interfaces can differ from each other.

Also other solutions are possible, the telecommunication network can comprise for example a Code Division Multiple Access (CDMA) network, a Time Division Multiple Access (TDMA) network or a Personal Digital Cellular (PDC) network.

Furthermore it is possible that at least two telecommunication networks are coupled, such as two telecommunication networks each covering a different geographic area, or two telecommunication networks each operated by a different operator. In this case each one of the terminals can be restricted to operate in a single network or can be enabled to operate in a number of networks.

Advantageously at least one of the terminals comprises a Mobile Station, a computer system or a Public Switched Telephone Network (PSTN) extension. This makes easy communication between the IN control unit and various types of terminals possible.

Advantageously the message server unit comprises a Short Message Service Center (SMSC) and at least one of the messages comprises a Short Message (SM) according to the GSM Short Message Service (SMS) standard, or the 3rd Generation Partnership Project (3GPP) SMS standard. By using this known, widespread message type, existing terminals that already have an SMS functionality integrated are able to use the new features introduced by the subject of the invention. Furthermore, sending and receiving a SM is simple, convenient and well known to most users of telecommunication systems. Additionally, the use of Short Message only has low bandwidth requirements, putting only little additional load on the telecommunication network. Also sending and receiving of a Short Message is possible when the terminal is occupied in a telephone call, which increases the ways of use and increases the possibilities for services that can be offered by means of the subject of the invention, as will be explained in more detail below.

Each Short Message comprises a maximum content which is equivalent to 160 characters. It is possible that at least two Short Messages are coupled, which is known within the GSM SMS standard and the 3GPP SMS standard. This allows to send a long content exceeding the above maximum content, making use of Short Messages. The Short Message technology allows to make use of additional protocols in the content of the message, such as WAP, HTML or e-mail, so that these protocols can be used also, offering numerous possibilities for future uses and services. At least one of the messages can comprise alphanumerical, textual, graphical or moving pictorial, video information, so that various kinds of messages can be sent and/or received by the terminal, such as text, pictograms etc. enabling to build a user friendly user interface for the IN functions.

The invention further comprises a method for transferring information in a telecommunication system as outlined above, from one of the terminals to the IN control unit, the method comprising: preparing the first message and storing it in said terminal, the first message comprising the information; transferring the first message from said terminal to the message server unit; and transferring the second message from the message server unit to the IN control unit, the second message comprising the information. Also the invention comprises a method for transferring information in the telecommunication system, from the IN control unit to at least one of the terminals, the method comprising: preparing a first message in the IN control unit, the first message comprising the information; transferring the first message from the IN control unit to a message server unit; and transferring the second message from the message server unit to at least one terminal, the second message comprising the information. These methods allows to transfer a substantial amount of useful information related to IN functions between the IN control unit and the user of a terminal in a user friendly way.

The messages can comprise user data or generic data that is available in the IN control unit, such as information about the location of one of the terminals, about an account of a subscriber of one of the terminals, about a call-credit balance of one of the terminals, about a charge of a telephone call or about the operation of the IN control unit.

Furthermore the preparing and sending of at least one of the messages can be initiated by an event occurring in the telecommunication system, such as a change in a location of one of the terminals, an exceeding of predefined call credit limits, a change in a user profile of one of the terminals, a set-up or termination of a call, an exceeding of a predefined time period, a message received from one of the terminals or a change in the operation conditions of the IN control unit. This allows to further increase functionality by sending the information at a suitable moment, which is initiated by a corresponding, suitable event occurring in the network. This makes it possible to offer advanced functionality as will be outlined below.

Also the invention comprises a use of the first and the second message in a telecommunication system as outlined above to transfer information from the IN control unit to at least one of the terminals, and a use of the first and the second message in such telecommunication system to transfer information from one of the terminals to the IN control unit.

A specific use is to send textual information about the charge of a call to a user of a terminal, wherein the information about the charge of the call can be sent during the call or after the call. Another use is to send an indication to a user when a terminal of the user enters or leaves a certain location area. A further use is to send an indication to a terminal when another one of the terminals enters or leaves a certain location area. Still a further use is to send information about the location of one of the terminals to this terminal or to another one of the terminals. Again another use is to monitor a subscription of one of the terminals from another one of the terminals. In this use, a warning can be sent to said other one of the terminals when said one of the terminals reaches a certain credit threshold. Also in this use a warning can be sent to the other one of the terminals when the one of the terminals performs a call with a call charge that goes beyond a predefined financial limit. Again a further use is to send a message to one of the terminals attempting to call another one of the terminals, when the other one of the terminals can not be reached. In this use a user of the other one of the terminals can at least partly define the contents of the message. Still again a further use is to send a call overview to one of the terminals, the call overview can be comprised in an e-mail. A further use is to change a user profile from one of the terminals. Other uses include to send an overview of a user profile to one of the terminals, where the user profile can be comprised in an e-mail, to upgrade a balance of a pre-paid account from a Visiting Public Land Mobile Network (VPLMN), or to inform an operator about an operating condition of the IN control unit by sending information about the operating condition to one of the terminals, where the information about the operating condition can comprise status information, traffic-load information and/or error message information.

Further features and advantages will become clear from the appended drawings, illustrating non-limiting embodiments of the invention, in which:
Fig. 1 shows a block diagram of a telecommunication system according to the prior art;
Fig. 2 shows a block diagram of a telecommunication system according to the invention; and
Fig. 3 shows a block diagram of another telecommunication system according to the invention.

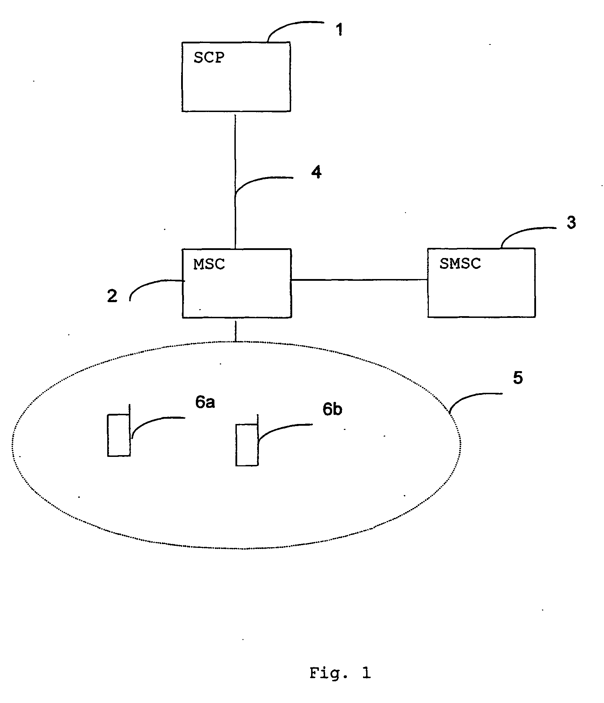

Fig. 1 shows an Intelligent Network control unit, such as a Service Control Point (SCP) 1. Also, Fig. 1 shows a telecommunication network, in this example a Public Land Mobile Network PLMN formed by a GSM network. From the GSM network only a few parts are shown: a Mobile Switching Center (MSC) 2 which is coupled to a Short Message Service Center (SMSC) 3. In the coverage area 5 of the GSM network, Mobile Stations (MSs) 6a, 6b, functioning as terminals, can be coupled in a wireless way to the MSC 2 by means of Base Stations and Base Station Controllers. The Base Stations and Base Station Controllers are known per se and therefore not shown. The coupling between the GSM network and the SCP 1 is implemented by means of an interface 4 between the MSC 2 and the SCP 1. The MSC 2 performs the switching operations for setting up normal telephone calls for the MS 6a, 6b. If, for example during set-up of a telephone call, the MSC 2 recognises that the MS 6a, 6b has access to IN functions, then the MSC 2 sends data to the SCP 1, and the MSC 2 receives instructions from the SCP 1 about the handling and routing of the call. If a first MS 6a sends a message, in this case a Short Message, to a second MS 6b, then the Short Message is first sent from the first MS 6a via the MSC 2 to the SMSC 3. The SMSC 3 then attempts to deliver the SM to the second MS 6b, which has been assigned by the first MS, by sending the SM via the MSC 2 to the second MS 6b.

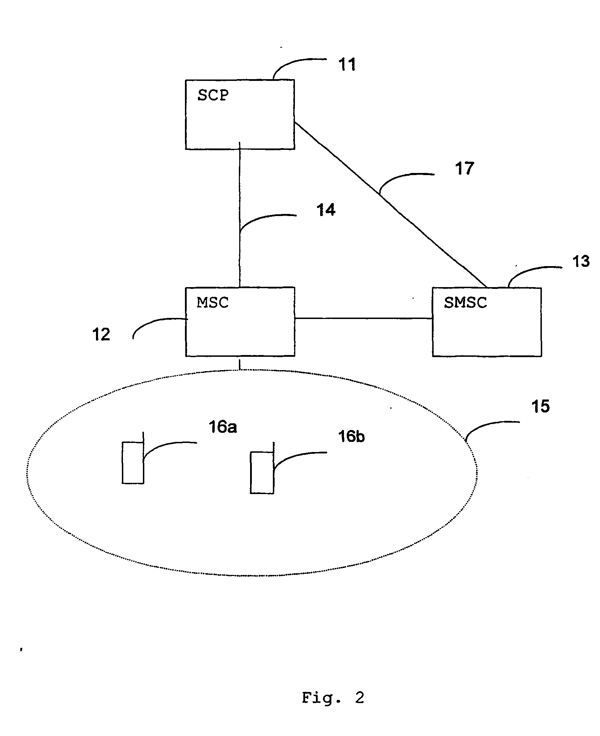

In Fig. 2, similar to Fig. 1, the telecommunication system comprises a SCP 11 functioning as IN control unit and a telecommunication network, in this example also a Public Land Mobile Network formed by a GSM network. Also similar to Fig. 1, only a few parts from the GSM network are shown. A Mobile Switching Center (MSC) 12 which is coupled to a Short Message Service Center (SMSC) 13. Identical to Fig. 1, Mobile Stations (MS) 16a, 16b can be coupled in a wireless way, in the coverage area of the GSM network, to the MSC 12 by means of Base Stations, not shown, and Base Station Controllers, also not shown. The coupling between the GSM network and the SCP 11 is, similar to Fig. 1 implemented by means of an interface 14 between the MSC 12 and the SCP 11. In addition to the telecommunication system in Fig. 1, the system in fig. 2 has an interface 17 between the SCP 11 and the SMSC 13. This interface 17 makes it possible to implement direct communication between the SMSC 13 and the SCP 11. In this example, the interface 17 makes use of SMTP, and TCP/IP, Transmission Control Protocol running on top of Internet Protocol, which protocols are supported by most vendors of SMSC. The SCP 11 is adapted to communicate using these protocols, by means of suitable adaptations which include suitable programming. The interface 17 allows to transmit Short Messages between the SMSC 13 and the SCP 11, which Short Messages might be encapsulated by other data, following the specifications of the communication protocols used. In the case a MS 16a, 16b which has access to IN functions, is involved in an operation such as the set-up of a telephone call, the MSC 12 sends data to the SCP 11 and the MSC 12 receives data back from the SCP 11 containing instructions, in the way described with fig. 1. In the case the user of a MS 16a wants to check his IN profile containing the settings and parameters for the IN functions, a Short Message is prepared in the MS 16a and is sent, via the MSC 12 to the SMSC 13. Now the SMSC 13 sends a second Short Message, containing the information from the first Short Message to the SCP 11 via the interface 17 between the SMSC 13 and the SCP 11. The SCP 11 is adapted by means of suitable programming to interpret the message received from the SMSC 13. Next the SCP 11 prepares a Short Message containing the required data and sends this Short Message to the SMSC 13. Then the SMSC 13 again sends a Short Message, containing the required data to the MS 16a.

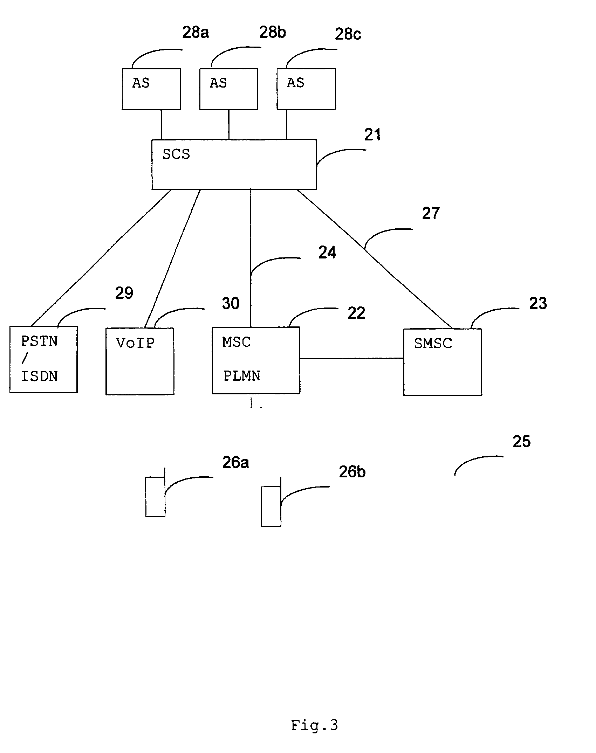

Fig. 3 shows a telecommunication system comprising a mobile telecommunications network, in this case a so-called 3rd generation W-CDMA network. The IN control unit is implemented by means of a Service Capability Server (SCS) 21, which is connected to a number of Application Servers (AS) 28a, 28b, 28c. The SCS 21 is connected to a PSTN 29, in this case an Integrated Services Digital Network (ISDN), to a computer network via a Voice over IP (VoIP) server 30, and to a Public Land Mobile Network PLMN, in this case a 3rd generation, W-CDMA network, from which only an MSC 22 and a coverage area 25 are shown, in which Mobile Stations 26a, 26b, acting as terminals, can be coupled wirelessly to the MSC 22. The connection between the SCS 21 and the MSC 22 is implemented by means of an interface 24. Further, the MSC 22 is connected to an SMSC 23, for the handling of Short Messages sent from or to a terminal, such as a Mobile Station 26a, 26b, as described with fig. 1 and fig. 2. The SCS 21 is coupled to the SMSC 23 via an interface 27, and the SCS 21 is adapted to receive as well as to send Short Messages. This allows the user of a Mobile Station 26a to communicate in an easy way with the SCS by sending a Short Message. This Short Message is routed from the Mobile Station 26a, via the MSC 22 to the SMSC 23. The SMSC 23 in turn sends a Short Message to the SCS 21 via the interface 27. The SCS 21 is assisted by at least one suitably programmed AS 28a, 28b, 28c to interpret the contents of a Short Message received and to define the contents of a Short Message which is to be sent. If data, such as a profile is to be sent from the SCS to a Mobile Station 26a, the SCS 21 prepares a Short Message and sends this via the interface 27 to the SMSC 23. The SMSC 23 in turn sends a Short Message via the MSC 22 to the Mobile Station 26a.

Apart from the uses given above, the invention allows to easily implement a large amount of other advanced, user friendly functions. It is, for example, possible to send information to a computer system residing at the house of a subscriber. A use could be that, when the Mobile Station of the subscriber approaches the location area of his house, a message is sent by the IN control unit to the computer system, enabling to activate for example the heating system of the house.

Another example could be to supervise children. When a child leaves a predefined location area, a message is sent to the telephones of its parents. Still another example is to update an IN profile or check other IN settings from a portable computer or Personal Digital Assistant (PDA) via a personal web-page. Alternatively, an SCP could write all relevant information to a web-page. To accomplish this, the IN control unit sends messages containing web content such as HTML to the message server, which sends messages to a web server. The web server can be inspected from a Mobile Station equipped with a browsing functionality.

## Claims

1. A telecommunication system for transferring telephone calls and/or data between a first terminal (6a, 16a, 26a) and at least one second terminal (6b, 16b, 26b), comprising:
- a telecommunication network for the transfer of the telephone calls and/or the data;
- an Intelligent Network (IN) control unit (1, 11, 21), coupled to the telecommunication network for providing Intelligent Network services in the telecommunication network; and
- a message server unit (3, 13, 23), coupled to the telecommunication network for receiving a first message from one of the terminals (6a, 16a, 26a, 6b, 16b, 26b) and for sending a second message to at least one of the terminals (6a, 16a, 26a, 6b, 16b, 26b), **characterised in that**
the IN control unit (11, 21) is adapted to send the first message to the message server unit (13, 23)and/or to receive the second message from the message server unit (13, 23), the IN control unit (11, 21) is adapted to be coupled to the message server unit (13, 23), enabling the IN control unit (11, 21) to send the first message and/or receive the second message to and/or from the message server unit (13, 23), and the IN control unit (11, 21) is coupled to the message server unit (13, 23) via an interface (17, 27) between the IN control unit (11, 21) and the message server unit (13, 23).

2. The telecommunication system according to claim 1, wherein the IN control unit (11, 21) is adapted to define a contents of the first message.

3. The telecommunication system according to claim 1, wherein the IN control unit (11, 21) is adapted to interpret a contents of the second message for taking a specific action.

4. The telecommunication system according to claim 1, wherein the IN control unit (11, 21) is coupled to the message server unit (13, 23) via the interface (17, 27), a protocol for communication via the interface (17, 27), comprising Simple Mail Transfer Protocol (SMTP) or Short Message Peer to Peer (SMPP) Protocol.

5. The telecommunication system according to any of the preceding claims, wherein the telecommunication network comprises a mobile telecommunication network, such as a Globale Systeme Mobile (GSM) network or a Wideband Code Division Multiple Access (W-CDMA) network.

6. The telecommunication system according to claim 5, wherein the IN control unit (11, 21) comprises a Service Control Point (SCP)

7. The telecommunication system according to claim 5, wherein the IN control unit (11, 21) comprises a Service Capability Server (SCS) which is connected to at least one Application Server (AS) (28a, 28b, 28c), which assists the SCS by performing specific tasks, each AS (28a, 28b, 28c) having a respective interface to the SCS (11, 21).

8. The telecommunication system according to any of the preceding claims, wherein at least one of the terminals (16a, 26a, 16b, 26b) comprises a Mobile Station (MS), a computer system or a Public Switched Telephone Network (PSTN) extension

9. The telecommunication system according to any of the preceding claims, wherein the message server unit (13, 23) comprises a Short Message Service Center (SMSC).

10. The telecommunication system according to any of the preceding claims, wherein at least one of the messages comprises a Short Message (SM) according to the GSM Short Message Service (SMS) standard or 3rd Generation Partnership Project (3GPP) SMS standard.

11. The telecommunication system according to any of the preceding claims, wherein at least one of the messages comprises a content which complies to the Wireless Application Protocol (WAP) or to HTML, or comprises an e-mail, alphanumerical, textual information, graphical information, or pictorial, video information.

12. A method for transferring information in a telecommunication system according to claim 1, from one of a group comprising the IN control unit (11, 21) and one of the terminals (16a, 26a, 16b, 26b), to the other one of the group comprising the IN control unit (11, 21) and the one of the terminals (16a, 26a, 16b, 26b), the method comprising:
- preparing a first message and storing it in one of the group comprising IN control unit (11, 21) and the one of the terminals (16a, 26a, 16b, 26b), the first message comprising the information;
- transferring the first message from said one of the group comprising the IN control unit (11, 21) and the one of the terminals (16a, 26a, 16b, 26b), to the message server unit (13, 23); and
- transferring the second message from the message server unit (13, 23); to the other one of the group comprising the IN control unit (11, 21) and the one of the terminals (16a, 26a, 16b, 26b), the second message comprising the information, the method wherein the IN control unit (11, 21) is coupled to the message server (13, 23) via an interface (17, 27) between the IN control unit and the message server unit.

13. The method according to claim 12, wherein the telecommunication network comprises a mobile telecommunication network, such as a Globale Systeme Mobile (GSM) network or Wideband Code Division Multiple Access (W-CDMA) network.

14. The method according to claim 13, wherein the IN control unit (11, 21) comprises a Service Control Point (SCP) or a Service Capability Server (SCS) which is connected to at least one Application Server (AS) (28a, 28b, 28c), which assists the SCS by performing specific tasks, each AS (28a, 28b, 28c), having a respective interface to the SCS.

15. The method according to any of claims 12 - 14, wherein at least one of the terminals (16a, 26a, 16b, 26b) comprises a Mobile Station (MS), a computer system or a Public Switched Telephone Network (PSTN) extension.

16. The method according to any of claims 12 - 15, wherein the message server unit (13, 23) comprises a Short Message Service Center (SMSC).

17. The method according to any of claims 12 - 16, wherein at least one of the messages comprises a Short Message (SM) according to the GSM Short Message Service (SMS) standard or 3rd Generation Partnership Project (3GPP) SMS standard.

18. The method according to claim 17, wherein at least two Short Messages (SM) are coupled.

19. The method according to claims 17 or 18, wherein at least one of the messages comprises a content, which complies to the Wireless Application Protocol (WAP) or HTML or comprises an e-mail.

20. The method according to any of the claims 12 - 19, wherein at least one of the messages comprises alphanumerical, textual information, graphical information or moving pictorial, video information.

21. The method according to any of claims 12 - 20, wherein at least one of the messages comprises information about a location of one of the terminals (16a, 26a, 16b, 26b), information about an account of a subscriber of one of the terminals (16a, 26a, 16b, 26b), information about a call-credit balance of one of the terminals (16a, 26a, 16b, 26b), information about a charge of a telephone call or information about the operation of the IN control unit (11, 21).

22. The method according to any of claims 12 - 21, wherein a preparation and/or transfer of at least one of the messages is initiated by an event in the telecommunication system.

23. The method according to any of claims 12 - 22, wherein the event comprises a change in a location of one of the terminals (16a, 26a, 16b, 26b), an exceeding of predefined call credit limits, a change in a user profile of one of the terminals (16a, 26a, 16b, 26b), a set-up or termination of a call, an exceeding of a predefined time period, a message received from one of the terminals (16a, 26a, 16b, 26b) or a change in the operation conditions of the IN control unit (11, 21).

24. A use of a first and a second message in the telecommunication system of any of claims 1 - 11 to transfer information from one of a group comprising the IN control unit (11, 21) and one of the terminals (16a, 26a, 16b, 26b) to the other one of the group comprising the IN control unit (11, 21) and the one of the terminals (16a, 26a, 16b, 26b), the IN control unit (11, 21) being coupled to the message server unit via an interface (17, 27) between the IN control unit and the message server unit.

25. The use of the first and the second message according to claim 24 to send textual information about the charge of a call to a user, during the call or after the call.

26. The use of the first and the second message according to claim 24 to send an indication to a user when the terminal (16a, 26a), of the user, or another one of the terminals (16b, 26b), enters or leaves a certain location area.

27. The use of the first and the second message according to claim 24 to send information about the location of one of the terminals (16a, 26a, 16b, 26b), to this terminal (16a, 26a), or to another one of the terminals (16b, 26b).

28. The use of the first and the second message according to claim 24 to monitor a subscription of one of the terminals (16a, 26a, 16b, 26b), from an other one of the terminals (16a, 26a, 16b, 26b).

29. The use of the first and the second message according to claim 28, wherein a warning is sent to said other one of the terminals (16a, 26a, 16b, 26b) when said one of the terminals (16a, 26a, 16b, 26b) reaches a certain credit threshold or performs a call with a call charge that goes beyond a predefined financial limit.

30. The use of the first and the second message according to claim 24 to send a message to one of the terminals (16a, 26a, 16b, 26b), attempting to call an other one of the terminals (16a, 26a, 16b, 26b), when said other one of the terminals (16a, 26a, 16b, 26b), can not be reached.

31. The use of the first and the second message according to claim 30, wherein the contents of the message is at least partly defined by a user of said other one of the terminals (16a, 26a, 16b, 26b).

32. The use of the first and the second message according to claim 24 to send a call overview to one of the terminals (16a, 26a, 16b, 26b) which overview is comprised such as in an e-mail

33. The use of the first and the second message according to claim 24 to change a user profile from one of the terminals (16a, 26a, 16b, 26b)

34. The use of the first and the second message according to claim 24 to send an overview of a user profile to one of the terminals, (16a, 26a, 16b, 26b), comprised in such as an e-mail

35. The use of the first and the second message according to claim 24 to upgrade a balance of a pre-paid account from a Visiting Public Land Mobile Network (VPLMN).

36. The use of the first and the second message according to claim 24 to inform an operator about an operating condition of the IN control unit (11, 21) by sending information about the operating condition to one of the terminals (16a, 26a, 16b, 26b), where the operating condition comprises status information such as traffic-load information and/or error message information.

## Patentansprüche

1. Telekommunikationssystem zum Übertragen von Telefonanrufen und/oder Daten zwischen einem ersten Endgerät (6a, 16a, 26a) und mindestens einem zweiten Endgerät (6b, 16b, 26b), umfassend:
- ein Telekommunikationsnetz zur Übertragung der Telefonanrufe und/oder der Daten;
- eine intelligente Netz (IN - Intelligent Network)-Steuereinheit (1, 11, 21), die an das Telekommunikationsnetz zum Bereitstellen von intelligenten Netzdiensten in dem Telekommunikationsnetz gekoppelt ist; und
- eine Nachrichtenservereinheit (3, 13, 23), die an das Telekommunikationsnetz zum Empfangen einer ersten Nachricht von einem der Endgeräte (6a, 16a, 26a, 6b, 16b, 26b) und zum Senden einer zweiten Nachricht an mindestens eines der Endgeräte (6a, 16a, 26a, 6b, 16b, 26b) gekoppelt ist, **dadurch gekennzeichnet, dass**
die IN-Steuereinheit (11, 21) dazu geeignet ist, die erste Nachricht an die Nachrichtenservereinheit (13, 23) zu senden und/oder die zweite Nachricht von der Nachrichtenservereinheit (13, 23) zu empfangen, die IN-Steuereinheit (11, 21) dazu geeignet ist, an die Nachrichtenservereinheit (13, 23) gekoppelt zu werden, wobei die IN-Steuereinheit (11, 21) dazu befähigt wird, die erste Nachricht an die Nachrichtenservereinheit (13, 23) zu senden und/oder die zweite Nachricht von dieser zu empfangen, und die IN-Steuereinheit (11, 21) an die Nachrichtenservereinheit (13, 23) über eine Schnittstelle (17, 27) zwischen der IN-Steuereinheit (11, 21) und der Nachrichtenservereinheit (13, 23) gekoppelt ist.

2. Telekommunikationssystem nach Anspruch 1, wobei die IN-Steuereinheit (11, 21) dazu geeignet ist, einen Inhalt der ersten Nachricht zu definieren.

3. Telekommunikationssystem nach Anspruch 1, wobei die IN-Steuereinheit (11, 21) dazu geeignet ist, einen Inhalt der zweiten Nachricht zum Ergreifen einer spezifischen Maßnahme zu interpretieren.

4. Telekommunikationssystem nach Anspruch 1, wobei die IN-Steuereinheit (11, 21) an die Nachrichtenservereinheit (13, 23) über die Schnittstelle (17, 27), ein Protokoll zur Kommunikation über die Schnittstelle (17, 27), das ein Simple Mail Transfer Protocol (SMTP) oder ein - Short Message Peer to Peer Protocol (SMPP) umfasst, gekoppelt ist.

5. Telekommunikationssystem nach einem der vorhergehenden Ansprüche, wobei das Telekommunikationsnetz ein mobiles Telekommunikationsnetz wie ein Netz des globalen Systems zur mobilen Kommunikation (GSM - Global System Mobile) oder ein Breitbandnetz mit Vielfachzugriff im Codemultiplex (W-CDMA - Wideband Code Division Multiple Access)umfasst.

6. Telekommunikationssystem nach Anspruch 5, wobei die IN-Steuereinheit (11, 21) einen Dienststeuerpunkt (SCP - Service Control Point) umfasst.

7. Telekommunikationssystem nach Anspruch 5, wobei die IN-Steuereinheit (11, 21) einen Diensttauglichkeit-Server (SCS - Service-Capability Server) umfasst, der mit mindestens einem Anwendungsserver (AS - Application Server) (28a, 28b, 28c) verbunden ist, der den SCS durch Ausführen bestimmter Aufgaben unterstützt, wobei jeder AS (28a, 28b, 28c) eine entspechende Schnittstelle zu dem SCS (11, 21) aufweist.

8. Telekommunikationssystem nach einem der vorhergehenden Ansprüche, wobei mindestens eines der Endgeräte (16a, 26a, 16b, 26b) eine Mobilstation (MS - Mobile Station), ein Computersystem oder eine öffentliche Fernsprechnetz (PSTN - Public Switched Telephone Network)-Erweiterung umfasst.

9. Telekommunikationssystem nach einem der vorhergehenden Ansprüche, wobei die Nachrichtenservereinheit (13, 23) eine Kurznachrichten-Dienststelle (SMSC - Short Message Service Center) umfasst.

10. Telekommunikationssystem nach einem der vorhergehenden Ansprüche, wobei mindestens eine der Nachrichten eine Kurznachricht (SM - Short Message) gemäß dem GSM-Kurznachrichtendienst (SMS - Short Messsage Service)-Standard oder einen SMS-Standard des Partnerschaftsprojekts der dritten Generation (3GPP - 3rd Generation Partnership Project) umfasst.

11. Telekommunikationssystem nach einem der vorhergehenden Ansprüche, wobei mindestens eine der Nachrichten einen Inhalt umfasst, der das Wireless Application Protocol (WAP) oder HTML einhält, oder eine E-Mail, alphanumerische Informationen, Textinformationen, grafische Informationen oder Bildinformationen, Videoinformationen umfasst.

12. Verfahren zum Übertragen von Informationen in einem Telekommunikationssystem nach Anspruch 1 von einem einer Gruppe, welche die IN-Steuereinheit (11, 21) und eines der Endgeräte (16a, 26a, 16b, 26b) umfasst, zum anderen der Gruppe, welche die IN-Steuereinheit (11, 21) und das andere der Endgeräte (16a, 26a, 16b, 26b) umfasst, wobei das Verfahren Folgendes umfasst:
- Erstellen einer ersten Nachricht und Speichern der Nachricht in einem der Gruppe, welche die IN-Steuereinheit (11, 21) und eines der Endgeräte (16a, 26a, 16b, 26b) umfasst, wobei die erste Nachricht die Informationen umfasst;
- Übertragen der ersten Nachricht von dem genannten der Gruppe, welche die IN-Steuerinformationen (11, 21) und eines der Endgeräte (16a, 26a, 16b, 26b) umfasst, zur Nachrichtenservereinheit (13, 23); und
- Übertragen der zweiten Nachricht von der Nachrichtenservereinheit (13, 23) zum anderen der Gruppe, welche die IN-Steuereinheit (11, 21) und das eine der Endgeräte (16a, 26a, 16b, 26b) umfasst, wobei die zweite Nachricht die Informationen umfasst, wobei die IN-Steuereinheit (11, 21) mit dem Nachrichtenserver (13, 23) über eine Schnittstelle (17, 27) zwischen der IN-Steuereinheit und der Nachrichtenservereinheit gekoppelt wird.

13. Verfahren nach Anspruch 12, wobei das Telekommunikationsnetz ein mobiles Telekommunikationsnetz wie ein Netz des globalen Systems zur mobilen Kommunikation (GSM) oder ein Breitbandnetz mit Vielfachzugriffs im Codemultiplex (W-CDMA) umfasst.

14. Verfahren nach Anspruch 13, wobei die IN-Steuereinheit (11, 21) einen Dienststeuerpunkt (SCP) oder einen Diensttauglichkeit-Server (SCS) umfasst, der mit mindestens einem Anwendungsserver (AS) (28a, 28b, 28c) verbunden ist, der den SCS durch Ausführen spezifischer Aufgaben unterstützt, wobei jeder AS (28a, 28b, 28c) eine entsprechende Schnittstelle zu dem SCS aufweist.

15. Verfahren nach einem der Ansprüche 12 bis 14, wobei mindestens eines der Endgeräte (16a, 26a, 16b, 26b) eine Mobilstation (MS), ein Computersystem oder eine öffentliche Fernsprechnetz (PSTN)-Erweiterung umfasst.

16. Verfahren nach einem der Ansprüche 12 bis 15, wobei die Nachrichtenservereinheit (13, 23) eine Kurznachrichten-Dienststelle (SMSC) umfasst.

17. Verfahren nach einem der Ansprüche 12 bis 16, wobei mindestens eine der Nachrichten eine Kurznachricht (SM) gemäß dem GSM-Kurznachrichtendienst (SMS)-Standard oder dem SMS-Standard des Partnerschaftsprojekt der dritten Generation (3GPP) umfasst.

18. Verfahren nach Anspruch 17, wobei mindestens zwei Kurznachrichten (SM) verbunden werden.

19. Verfahren nach Anspruch 17 oder 18, wobei mindestens eine der Nachrichten einen Inhalt umfasst, der das wireless application protocol (WAP) oder HTML einhält oder eine E-Mail umfasst.

20. Verfahren nach einem der Ansprüche 12 bis 19, wobei mindestens eine der Nachrichten alphanumerische Informationen, Textinformationen, grafische Informationen oder bewegliche Bildinformationen, Videoinformationen umfasst.

21. Verfahren nach einem der Ansprüche 12 bis 20, wobei mindestens eine der Nachrichten Informationen über einen Standort eines der Endgeräte (16a, 26a, 16b, 26b), Informationen über ein Konto eines Teilnehmers eines der Endgeräte (16a, 26a, 16b, 26b), Informationen über ein Anrufguthaben eines der Endgeräte (16a, 26a, 16b, 26b), Informationen über eine Abrechnung eines Telefonanrufs oder Informationen über den Betrieb der IN-Steuereinheit (11, 21) umfasst.

22. Verfahren nach einem der Ansprüche 12 bis 21, wobei eine Erstellung und/oder Übertragung mindestens einer der Nachrichten durch ein Ereignis in dem Telekommunikationssystem initiiert wird.

23. Verfahren nach einem der Ansprüche 12 bis 22, wobei das Ereignis einen Wechsel eines Standorts eines der Endgeräte (16a, 26a, 16b, 26b), ein Überschreiten von vordefinierten Anrufguthabengrenzen, eine Veränderung in einem Benutzerprofil eines der Endgeräte (16a, 26a, 16b, 26b), einen Aufbau oder eine Beendigung eines Anrufs, ein Überschreiten eines vordefinierten Zeitraums, eine Nachricht, die von einem der Endgeräte (16a, 26a, 16b, 26b) empfangen wird, oder eine Veränderung hinsichtlich der Betriebsbedingungen der IN-Steuereinheit (11, 21) umfasst.

24. Verwendung einer ersten und einer zweiten Nachricht in dem Telekommunikationssystem nach einem der Ansprüche 1 bis 11, um Information von einem einer Gruppe, welche die IN-Steuereinheit (11, 21) und eines der Endgeräte (16a, 26a, 16b, 26b) umfasst, zu einem anderen der Gruppe, welche die IN-Steuereinheit (11, 21) und eines der Endgeräte (16a, 26a, 16b, 26b) umfasst, zu übertragen, wobei die IN-Steuereinheit (11, 21) mit der Nachrichtenservereinheit über eine Schnittstelle (17, 27) zwischen der IN-Steuereinheit und der Nachrichtenservereinheit verbunden ist.

25. Verwendung der ersten und der zweiten Nachricht nach Anspruch 24, um Textinformationen über die Abrechnung eines Anrufs während des Anrufs oder nach dem Anruf an einen Benutzer zu senden.

26. Verwendung der ersten und der zweiten Nachricht nach Anspruch 24, um einem Benutzer eine Anzeige darüber zu senden, wann das Endgerät (16a, 26a) des Benutzers oder ein anderes der Endgeräte (16b, 26b) einen bestimmten Standortbereich betritt oder verlässt.

27. Verwendung der ersten und der zweiten Nachricht nach Anspruch 24, um Informationen über den Standort eines der Endgeräte (16a, 26a, 16b, 26b) an dieses Endgerät (16a, 26a) oder an ein anderes der Endgeräte (16b, 26b) zu senden.

28. Verwendung der ersten und der zweiten Nachricht nach Anspruch 24, um eine Teilnahme eines der Endgeräte (16a, 26a, 16b, 26b) von einem anderen der Endgeräte (16a, 26a, 16b, 26b) zu überwachen.

29. Verwendung der ersten und der zweiten Nachricht nach Anspruch 28, wobei eine Warnung an das andere der Endgeräte (16a, 26a, 16b, 26b) gesendet wird, wenn das eine der Endgeräte (16a, 26a, 16b, 26b) einen bestimmten Guthabenschwellenwert erreicht oder einen Anruf mit einer Anrufabrechnung ausführt, die über eine vordefinierte Geldgrenze hinausgeht.

30. Verwendung der ersten und der zweiten Nachricht nach Anspruch 24, um eine Nachricht an eines der Endgeräte (16a, 26a, 16b, 26b) zu senden, welches versucht, ein anderes der Endgeräte (16a, 26a, 16b, 26b) anzurufen, wenn das andere der Endgeräte (16a, 26a, 16b, 26b) nicht erreicht werden kann.

31. Verwendung der ersten und der zweiten Nachricht nach Anspruch 30, wobei der Inhalt der Nachricht mindestens teilweise von einem Benutzer des anderen der Endgeräte (16a, 26a, 16b, 26b) definiert wird.

32. Verwendung der ersten und der zweiten Nachricht nach Anspruch 24, um eine Rufübersicht an eines der Endgeräte (16a, 26a, 16b, 26b) zu senden, wobei diese Übersicht zum Beispiel in einer E-Mail enthalten ist.

33. Verwendung der ersten und der zweiten Nachricht nach Anspruch 24, um ein Benutzerprofil von einem der Endgeräte (16a, 26a, 16b, 26b) zu verändern.

34. Verwendung der ersten und der zweiten Nachricht nach Anspruch 24, um eine Übersicht eines Benutzerprofils an eines der Endgeräte (16a, 26a, 16b, 26b) zu senden, wobei diese Übersicht zum Beispiel in einer E-Mail enthalten ist.

35. Verwendung der ersten und der zweiten Nachricht nach Anspruch 24, um ein Guthaben eines Prepaid-Kontos von einem besuchten öffentlichen landgestützten Mobilfunknetz (VPLMN - Visiting Public Land Mobile Network) aufzustocken.

36. Verwendung der ersten und der zweiten Nachricht nach Anspruch 24, um einen Betreiber durch Senden von Informationen über die Betriebsbedingung an eines der Endgeräte (16a, 26a, 16b, 26b) über eine Betriebsbedingung der IN-Steuereinheit (11, 21) zu informieren, wobei die Betriebsbedingung Statusinformationen wie Verkehrsvolumeninformationen und/oder Fehlermeldungsinformationen umfasst.

## Revendications

1. Système de télécommunications pour transférer des appels téléphoniques et/ou des données entre un premier terminal (6a, 16a, 26a) et au moins un deuxième terminal (6b, 16b, 26b), comprenant :
- un réseau de télécommunications pour le transfert des appels téléphoniques et/ou des données ;
- une unité de commande de Réseau intelligent (IN) (1, 11, 21), couplée au réseau de télécommunications pour assurer des services de Réseau intelligent dans le réseau de télécommunications ; et
- une unité de serveur de messages (3, 13, 23), couplée au réseau de télécommunications pour recevoir un premier message de l'un des terminaux (6a, 16a, 26a, 6b, 16b, 26b) et pour envoyer un deuxième message à au moins l'un des terminaux (6a, 16a, 26a, 6b, 16b, 26b),
**caractérisé en ce que**
l'unité de commande IN (11, 21) est adaptée pour envoyer le premier message à l'unité de serveur de messages (13, 23) et/ou pour recevoir le deuxième message de l'unité de serveur de message (13, 23), l'unité de commande IN (11, 21) est adaptée pour être couplée à l'unité de serveur de messages (13, 23), permettant à l'unité de commande IN (11, 21) d'envoyer le premier message et/ou de recevoir le deuxième message vers et/ou de l'unité de serveur de messages (13, 23), et l'unité de commande IN (11, 21) est couplée à l'unité de serveur de messages (13, 23) par l'intermédiaire d'une interface (17, 27) entre l'unité de commande IN (11, 21) et l'unité de serveur de messages (13, 23).

2. Système de télécommunications selon la revendication 1, dans lequel l'unité de commande IN (11, 21) est adaptée pour définir un contenu du premier message.

3. Système de télécommunications selon la revendication 1, dans lequel l'unité de commande IN (11, 21) est adaptée pour interpréter un contenu du deuxième message afin de mettre en place une action spécifique.

4. Système de télécommunications selon la revendication 1, dans lequel l'unité de commande IN (11, 21) est couplée à l'unité de serveur de messages (13, 23) par l'intermédiaire de l'interface (17, 27), un protocole de communication par l'intermédiaire de l'interface (17, 27) comprenant le Protocole SMTP (Simple Mail Transfer Protocol - Protocole de Transfert de Courrier simple) ou le Protocole SMPP (Short Message Peer to Peer - Messages courts entre homologues).

5. Système de télécommunications selon l'une quelconque des revendications précédentes, dans lequel le réseau de télécommunications comprend un réseau de télécommunications mobiles, tel qu'un réseau GSM (Globale Systeme Mobile) ou un réseau à Accès multiple par Différence de Code à large Bande (AMDC - L).

6. Système de télécommunications selon la revendication 5, dans lequel l'unité de commande IN (11, 21) comprend un Point de Commande de Service (SCP) .

7. Système de télécommunications selon la revendication 5, dans lequel l'unité de commande IN (11, 21) comprend un Serveur de Capabilité de Service (SCS) qui est relié à au moins un Serveur d'Application (AS) (28a, 28b, 28c), lequel aide le SCS à exécuter des tâches spécifiques, chaque AS (28a, 28b, 28c) ayant une interface respective avec le SCS (11, 21).

8. Système de télécommunications selon l'une quelconque des revendications précédentes, dans lequel au moins l'un des terminaux (16a, 26a, 16b, 26b) comprend une Station mobile (MS), un système informatique ou un poste de Réseau téléphonique commuté public (PSTN).

9. Système de télécommunications selon l'une quelconque des revendications précédentes, dans lequel l'unité de serveur de messages (13, 23) comprend un Centre de Service de Messages courts (SMSC).

10. Système de télécommunications selon l'une quelconque des revendications précédentes, dans lequel au moins l'un des messages comprend un Message court (SM) selon le standard du Service de Messages courts (SMS) GSM ou le standard SMS du 3rd Generation Partnership Project (3GPP).

11. Système de télécommunications selon l'une quelconque des revendications précédentes, dans lequel au moins l'un des messages comprend un contenu qui est conforme au Protocole d'Application Sans Fil (WAP) ou à HTML, ou comprend un courriel, des informations alphanumériques, textuelles, des informations graphiques ou des informations vidéo picturales.

12. Procédé pour transférer des informations dans un système
de télécommunications selon la revendication 1, de l'un d'un groupe comprend l'unité de commande IN (11, 21) et
l'un des terminaux (16a, 26a, 16b, 26b) vers l'autre du groupe comprenant l'unité de commande IN (11, 21) et l'un des terminaux (16a, 26a, 16b, 26b), le procédé comprenant :
- la préparation d'un premier message et son stockage dans l'un du groupe comprenant l'unité de commande IN (11, 21) et l'un des terminaux (16a, 26a, 16b, 26b), le premier message comprenant les informations ;
- le transfert du premier message de ledit un du groupe comprenant l'unité de commande IN (11, 21) et l'un des terminaux (16a, 26a, 16b, 26b), à l'unité de serveur de messages (13, 23) ; et
- le transfert du deuxième message de l'unité de serveur de messages (13, 23), à l'autre du groupe comprenant l'unité de commande IN (11, 21) et l'un des terminaux (16a, 26a, 16b, 26b), le deuxième message comprenant les informations, procédé dans lequel l'unité de commande IN (11, 21) est couplée au serveur de messages (13, 23) par l'intermédiaire d'une interface (17, 27) entre l'unité de commande IN et l'unité de serveur de messages.

13. Procédé selon la revendication 12, dans lequel le réseau de télécommunications comprend un réseau de télécommunications mobiles tel qu'un réseau GSM (Globale Systeme Mobile) ou un réseau à Accès multiple par Différence de Code à large Bande (AMDC - L).

14. Procédé selon la revendication 13, dans lequel l'unité de commande IN (11, 21) comprend un Point de Commande de Service (SCP) ou un Serveur de Capabilité de Service (SCS) qui est relié à au moins un Serveur d'Application (AS) (28a, 28b, 28c), lequel aide le SCS à exécuter des tâches spécifiques, chaque AS (28a, 28b, 28c) ayant une interface respective avec le SCS.

15. Procédé selon l'une quelconque des revendications 12 à 14, dans lequel au moins l'un des terminaux (16a, 26a, 16b, 26b) comprend une Station mobile (MS), un système informatique ou un poste de Réseau téléphonique commuté public (PSTN).

16. Procédé selon l'une quelconque des revendications 12 à 15, dans lequel l'unité de serveur de messages (13, 23) comprend un Centre de Service de Messages courts (SMSC) .

17. Procédé selon l'une quelconque des revendications 12 à 16, dans lequel au moins l'un des messages comprend un Message court (SM) selon le standard du Service de Messages courts (SMS) GSM ou le standard SMS du 3rd Generation Partnership Project (3GPP) .

18. Procédé selon la revendication 17, dans lequel au moins deux Messages courts (SM) sont couplés.

19. Procédé selon la revendication 17 ou 18, dans lequel au moins l'un des messages comprend un contenu, lequel est conforme au Protocole d'Application sans Fil (WAP) ou HTML ou comprend un courriel.

20. Procédé selon l'une quelconque des revendications 12 à 19, dans lequel au moins l'un des messages comprend des informations alphanumériques, textuelles, des informations graphiques ou des informations vidéo picturales animées.

21. Procédé selon l'une quelconque des revendications 12 à 20, dans lequel au moins l'un des messages comprend des informations sur une position de l'un des terminaux (16a, 26a, 16b, 26b), des informations sur un compte d'un abonné de l'un des terminaux (16a, 26a, 16b, 26b), des informations sur un solde de crédit d'appels de l'un des terminaux (16a, 26a, 16b, 26b), des informations sur le coût d'un appel téléphonique ou des informations sur le fonctionnement de l'unité de commande IN (11, 21).

22. Procédé selon l'une quelconque des revendications 12 à 21, dans lequel une préparation et/ou un transfert d'au moins un des messages est lancé par un événement dans le système de télécommunications.

23. Procédé selon l'une quelconque des revendications 12 à 22, dans lequel l'événement comprend un changement de position de l'un des terminaux (16a, 26a, 16b, 26b), un dépassement des limites prédéfinies de crédit d'appels, un changement de profil d'utilisateur de l'un des terminaux (16a, 26a, 16b, 26b), un établissement ou un arrêt d'appel, un dépassement d'une période de temps prédéfinie, un message reçu de l'un des terminaux (16a, 26a, 16b, 26b) ou un changement des conditions opérationnelles de l'unité de commande IN (11, 21).

24. Utilisation d'un premier et d'un deuxième message dans le système de télécommunications selon l'une quelconque des revendications 1 à 11 pour transférer des informations de l'un d'un groupe comprenant l'unité de commande IN (11, 21) et l'un des terminaux (16a, 26a, 16b, 26b) à l'autre du groupe comprenant l'unité de commande IN (11, 21) et l'un des terminaux (16a, 26a, 16b, 26b), l'unité de commande IN (11, 21) étant couplée à l'unité de serveur de messages par l'intermédiaire d'une interface (17, 27) entre l'unité de commande IN et l'unité de serveur de messages.

25. Utilisation du premier et du deuxième message selon la revendication 24 pour envoyer des informations textuelles sur le coût d'un appel à un utilisateur durant l'appel ou après l'appel.

26. Utilisation du premier et du deuxième message selon la revendication 24 pour envoyer une indication à un utilisateur quand le terminal (16a, 26a), de l'utilisateur, ou un autre des terminaux (16b, 26b), entre dans une certaine zone ou en sort.

27. Utilisation du premier et du deuxième message selon la revendication 24 pour envoyer des informations sur la position de l'un des terminaux (16a, 26a, 16b, 26b), à ce terminal (16a, 26a), ou à un autre des terminaux (16b, 26b).

28. Utilisation du premier et du deuxième message selon la revendication 24 pour contrôler un abonnement de l'un des terminaux (16a, 26a, 16b, 26b), d'un autre des terminaux (16a, 26a, 16b, 26b).

29. Utilisation du premier et du deuxième message selon la revendication 28, dans lequel un avertissement est envoyé audit autre des terminaux (16a, 26a, 16b, 26b) quand ledit un des terminaux (16a, 26a, 16b, 26b) atteint un certain seuil de crédit ou effectue un appel dont le coût dépasse une limite financière prédéfinie.

30. Utilisation du premier et du deuxième message selon la revendication 24 pour envoyer un message à l'un des terminaux (16a, 26a, 16b, 26b), en essayant d'appeler un autre des terminaux (16a, 26a, 16b, 26b), quand ledit autre des terminaux (16a, 26a, 16b, 26b) n'est pas accessible.

31. Utilisation du premier et du deuxième message selon la revendication 30, dans lequel le contenu du message est défini au moins en partie par un utilisateur dudit autre des terminaux (16a, 26a, 16b, 26b) .

32. Utilisation du premier et du deuxième message selon la revendication 24 pour envoyer une vue générale d'un appel à l'un des terminaux (16a, 26a, 16b, 26b), laquelle vue générale est comprise comme dans un courriel.

33. Utilisation du premier et du deuxième message selon la revendication 24 pour changer un profil d'utilisateur de l'un des terminaux (16a, 26a, 16b, 26b) .

34. Utilisation du premier et du deuxième message selon la revendication 24 pour envoyer une vue générale d'un profil d'utilisateur à l'un des terminaux, (16a, 26a, 16b, 26b), compris dans un tel courriel.

35. Utilisation du premier et du deuxième message selon la revendication 24 pour mettre à niveau un solde d'un compte pré-payé à partir d'un Réseau mobile terrestre public visité (VPLMN).

36. Utilisation du premier et du deuxième message selon la revendication 24 pour informer un opérateur d'une condition opérationnelle de l'unité de commande IN (11, 21) en envoyant des informations sur la condition opérationnelle à l'un des terminaux (16a, 26a, 16b, 26b), où la condition opérationnelle comprend des informations d'état telles que des informations de charge de trafic et/ou des informations de message d'erreur.
